# EUROPEAN PATENT SPECIFICATION

(11) **EP 3 364 288 B1**
(45) Date of publication and mention of the grant of the patent: **21.12.2022**
(21) Application number: 18157466.6
(22) Date of filing: 19.02.2018
(51) Int. Cl.: G06F 3/12

(54) **PRINTER AND CONTENT DISPLAY METHOD**
DRUCKER UND INHALTSANZEIGEVERFAHREN
IMPRIMANTE ET PROCÉDÉ D'AFFICHAGE DE CONTENU

(30) Priority: 20.02.2017 JP 2017028755
(43) Date of publication of application: 22.08.2018
(73) Proprietor: Seiko Epson Corporation, Tokyo 160-8801 (JP)
(72) Inventor: MIZUNO, Satoshi, Suwa-shi, Nagano 392-8502 (JP); FURUTA, Yasuhiro, Suwa-shi, Nagano 392-8502 (JP)
(74) Representative: Miller Sturt Kenyon

(56) References cited:
- WO-A1-2013/070124
- US-A1- 2014 157 390
- US-A1- 2015 237 224

## Description

### BACKGROUND

### 1. Technical Field

The present invention relates to a printer and a content display method.

### 2. Related Art

WO 2013/070124 discloses a method and apparatus for obtaining a password hint, comprising: receiving a spatial pattern from a user; obtaining a password comprising a plurality of characters; obtaining a password hint comprising an arrangement of characters, wherein the arrangement of characters includes the plurality of characters of the password and additional characters, and the plurality of characters of the password are located within the arrangement of characters according to the received spatial pattern.

US 2015/237224 discloses a method of using an address book of an image forming apparatus on a web browser which includes receiving web data in an image forming apparatus from a web server; displaying a web page corresponding to the received web data on a display unit of the image forming apparatus; receiving an input of selecting one of at least one input box comprised in the web page; analyzing a form tag corresponding to the selected input box from the web data; and displaying a virtual text input device or an address list on the display unit based on the analysis result in which the selected input box is determined as an input box for receiving an input of an email address or a phone number, wherein the virtual keyboard is capable of being synchronized with an address book of the image forming apparatus.

US 2014/157390 discloses a mobile computing device login method which includes detecting a response from a server of a website or from an application native to the computing device that includes a login form displayed on a screen of the mobile computing device for authenticating a user, activating an application on the mobile computing device configured to auto fill the login form, and displaying a quick login keyboard, which includes a plurality of boxes configured to hold credential data of the user, wherein the quick login keyboard further includes a plurality of fill buttons, each of which is associated with one of the credential data boxes.

Devices that have a display, and in response to a user action while displaying a web page or other content on the display, display on the display an on-screen keyboard appropriate to an input field included in the displayed content, and receive user input through the on-screen keyboard, are now common. Such on-screen keyboards are also referred to as a soft keyboard, virtual keyboard, or software keyboard, for example.

Such on-screen keyboards are generally displayed when the user touches or clicks in the input field. JP-A-2010-277120 also describes an image forming device that is configured to also display an on-screen keyboard display button for invoking display of a built-in on-screen keyboard when a web page is displayed on the display panel.

Because an on-screen keyboard is not displayed by the related art unless the user performs some action, such as touching the input field or on-screen keyboard display button, the user is required to perform an extra action to use the on-screen keyboard. In addition, because the technology of JP-A-2010-277120 additionally displays an on-screen keyboard display button when displaying a web page, the web page may not be displayed as intended by the web page provider.

### SUMMARY

The present invention is directed to solving this problem, and provides a printer and content display method that reduce the actions required by the user to use an on-screen keyboard, and can display content appropriately.

One aspect of the invention is a printer according to claim 1.

When displaying the content on the display, this configuration automatically displays on the display, before displaying the content, an on-screen keyboard for inputting specific information to an input field included in the content. As a result, the user does not need to perform an operation to display the on-screen keyboard, and user convenience is improved. Displaying additional information such as an on-screen keyboard display button in the content as described in JP-A-2010-277120 is also not necessary, and the layout of the displayed content is not disturbed.

Also, when an on-screen keyboard is displayed before the content, this configuration enables the user to easily know what information to input to the on-screen keyboard.

A preferable feature is set out in claim 2.

In this configuration, prompted by user operation (clicking, touching) of a link on a page already displayed on the display, the display controller determines whether or not information corresponding to an input field is included in the link, and if such information is included in the link, displays an on-screen keyboard on the display before displaying the content on the display. In other words, the user, by the normal operation used to change the displayed content (operating the link), can display an on-screen keyboard related to the content to be displayed through the link.

A preferable feature is set out in claim 3.

A preferable feature is set out in claim 4.

This configuration enables easily displaying a prompt based on the text information included in the link.

According to another aspect of the present invention, there is provided a content display method according to claim 5.

Preferable features are set out in claims 6 to 8.

The invention can also be expressed as a program causing hardware (a computer) to execute the content display method, and as a computer-readable storage medium storing the program. The invention can also be expressed as a system including a server and a printer.

Other objects and attainments together with a fuller understanding of the invention will become apparent and appreciated by referring to the following description and claims taken in conjunction with the accompanying drawings.

### BRIEF DESCRIPTION OF THE DRAWINGS

Embodiments of the present invention will now be described by way of further example only and with reference to the accompanying drawings, in which:
FIG. 1 schematically illustrates the configuration of a system according to an embodiment of the invention.
FIG. 2 is a flow chart related to the display control process.
FIG. 3 illustrates the change in display content.
FIG. 4 shows an example of the related art for comparison with FIG. 3.

### DESCRIPTION OF EMBODIMENTS

A preferred embodiment of the present invention is described below with reference to the accompanying figures. Note that the figures simply show an example useful for describing the invention.

### 1. Basic system configuration

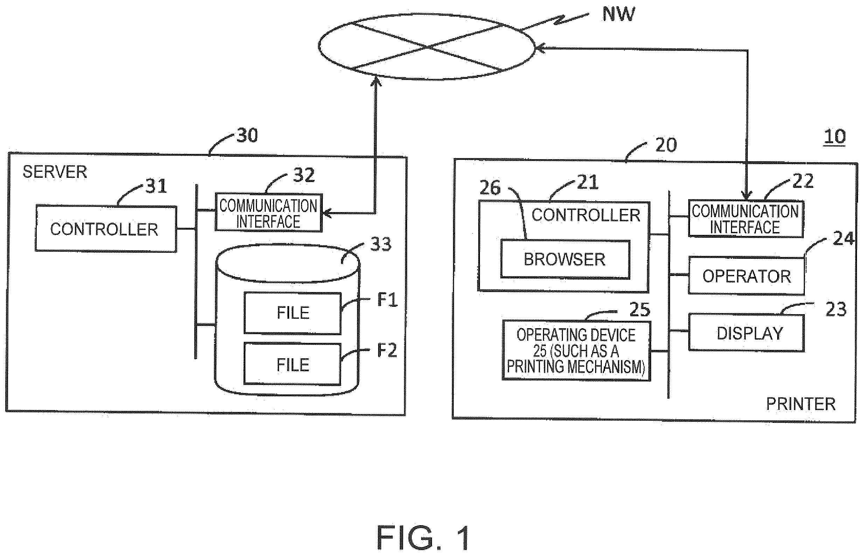

FIG. 1 schematically illustrates a system 10 according to this embodiment of the invention. The system 10 includes a printer 20 and server 30. The printer 20 in this example is a device that can at least function as a printer, but may be a multifunction device that also includes the functions of a scanner, fax machine, or other device in addition to the function of a printer. The printer 20 may also be a desktop printer, or a compact, handheld printer (mobile printer). The printer 20 may also be referred to as an image forming device. Because the printer 20 in this example also displays content on a display 23 as described below, the printer 20 may also be referred to as an image display device, image processing device, or display control device, for example.

The printer 20 and server 30 also have a network communication capability, and can communicate with each other over a network NW. The network NW may be a local area network (LAN), the Internet, or other network. The network NW may also be a wired network or a wireless network. FIG. 1 shows only one printer 20, but the system 10 may include multiple printers. Furthermore, if there are multiple systems 10, there may also be multiple servers 30 corresponding to the systems 10.

The server 30 includes a controller 31, communication interface 32, and storage 33. The server 30 may be configured with one or multiple information processing devices capable of functioning as a server.

The controller 31 is embodied by semiconductor devices such as a CPU, ROM, RAM, or other type memory device. The controller 31 controls the behavior of the server 30 by the CPU running operating processes based on programs stored in ROM, for example, and using RAM as working memory.

The communication interface 32 is an interface for communicating with external devices over the network NW according to a specific communication protocol, including known communication standards.

The storage 33 is embodied by a hard disk drive, flash memory, or other memory device, and is configured as part of the controller 31. Various files F1, F2, and so forth for displaying web pages (an example of content) are previously stored in storage 33. The files F1, F2 in this example are HTML (HyperText Markup Language) files.

The printer 20 includes a controller 21, communication interface 22, display 23, operator 24, and operating device 25.

The controller 21 is embodied by semiconductor devices such as a CPU, ROM, RAM, or other type memory device. The controller 21 controls the behavior of the operating device 25, display 23, and other parts of the printer 20 by the CPU running operating processes based on programs stored in ROM, for example, and using RAM as working memory.

A browser 26 (display control program) for displaying content on the display 23 is incorporated in the controller 21. The controller 21 functions as a display controller that displays an on-screen keyboard and content as described below on the display 23 by running the browser 26.

The configuration of the communication interface 22 conforms to the communication interface 32 described above.

The display 23 is a means for displaying visual information, and is an LCD or OLED display device, for example. The display 23 may be configured with a display and a drive circuit for driving the display.

The operator 24 is a means for receiving user operations, and may be a touch panel or physical buttons. The display 23 may obviously also function as such a touch panel. The display 23 and operator 24 may also be referred to as the operating panel of the printer 20.

The operating device 25 in this example is a general term for the specific means embodying the functions of the printer 20, and may refer more particularly to, for example, a printing mechanism for executing a printing operation based on print data; a scanner for optically reading documents and creating image data; a facsimile communicator for sending and receiving faxes; or an e-mail communicator for sending and receiving e-mail communications. The configuration of a printing mechanism, scanner, facsimile communicator, and e-mail communicator are known from the literature, and further description thereof is omitted.

The printing method used by the printing mechanism may be inkjet, electrophotographic, or other method.

### 2. Display control process

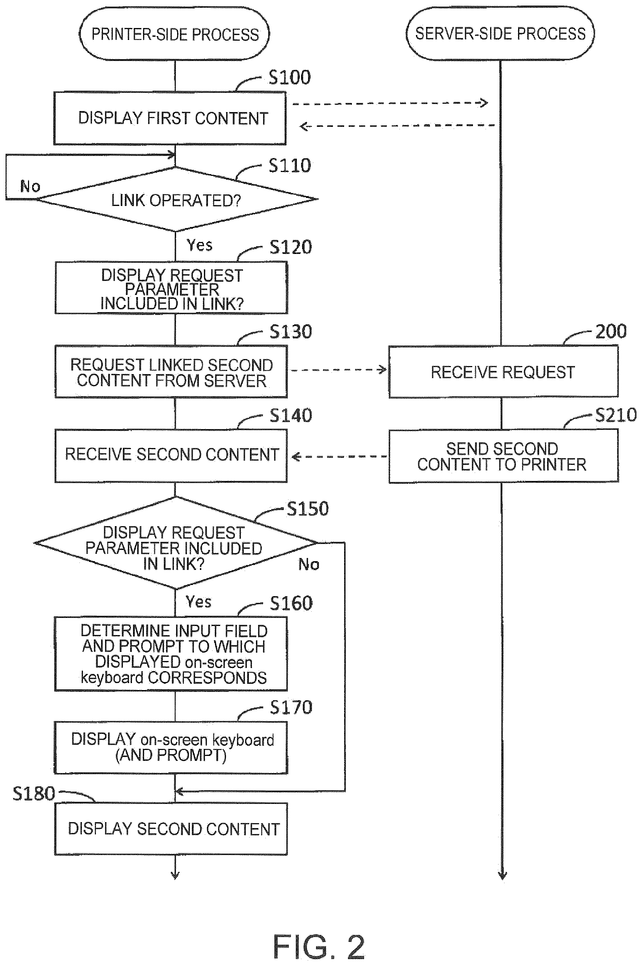

FIG. 2 is a flow chart of the display control process in this example. FIG. 2 shows the process executed on the printer 20 side (the process executed by the controller 21 running the browser 26), and the process executed on the server 30, side by side. At least part of the processes shown in FIG. 2 embody a content display method having a display control process.

The process shown in FIG. 2 supposes that the controller 21 has displayed first content on the display 23 (step S100). First content is, for example, a web page described by a file F1 stored on the server 30. In response to a specific command from the user, the controller 21 requests the file F1 from the server 30 over the network NW, acquires the file F1 from the server 30 as the response to the request, interprets the acquired file F1, and displays the first content on the display 23.

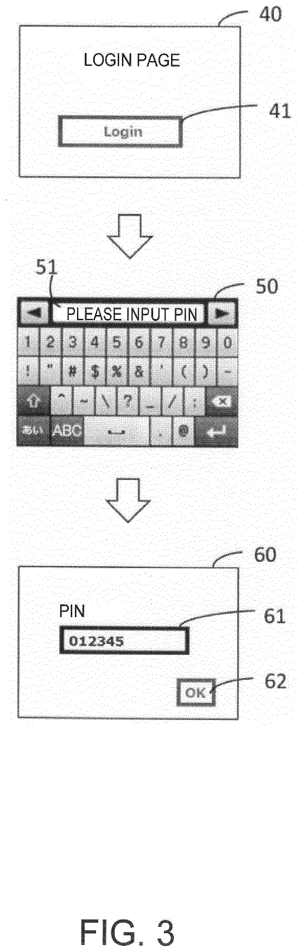

FIG. 3 illustrates the transition in content displayed on the display 23. The web page 40 on the top in FIG. 3 is an example of first content. This web page 40 is a page for logging in to the system 10, and includes a Login button 41. The user can operate (click or touch) the Login button 41 in the web page 40 shown on the display 23.

When the first content is displayed on the display 23 and the controller 21 detects operation of the link in the first content (step S110: Yes), the controller 21 goes to step S120. When the first content is the web page 40, the Login button 41 on the web page 40 is an example of a link in the first content.

In step S120, the controller 21 determines if identification information (a display request parameter) requesting displaying an on-screen keyboard is included in the link detected in step S110. The link set in the first content, that is, the address (URL (Uniform Resource Locator)) of the content (second content) accessed by the link, is written in the file F1 representing the first content. The controller 21 therefore interprets the file F1, and determines if a display request parameter is included in the URL of the second content linked to by the link.

An example of a URL of the second content that is linked to is shown below. Example 1) http://xxx.xxx.xx/contents2.html?kb_param=login_box.id&Kb_msg=^{∗∗∗∗∗∗}

In this first example of a URL, http://xxx.xxx.xx/contents2.html indicates the location of the second content the link accesses, and the following string "kb_param" is an example of a keyboard display request parameter. Therefore, when the URL of the first example is a link operated in the first content, a display request parameter may be considered to be included in the link.

The on-screen keyboard is displayed for inputting specific information to an input field included in the content. Therefore, that a display request parameter is included in the link indicates that an input field is included in the second content the link accesses. This display request parameter can therefore also be referred to as information corresponding to an input field. In other words, in this embodiment, the server 30 stores an HTML file that is previously generated for specific content, and the HTML file contains a URL accessed by the link including a display request parameter when the linked content includes an input field, and provides this file to the printer 20, which is a client.

After the decision of step S120, the controller 21 specifies the URL and requests the content corresponding to the link that was operated in step S110, that is, the second content linked to by the URL, from the server 30 through the network NW (step S130).

The server 30 (controller 31) receives the request from the printer 20 (step S200), and sends the second content specified in the request through the network NW to the printer 20 (step S210). In this example, the second content is a web page described by a file F2 stored on the server 30. Therefore, in response to the request for second content from the printer 20, the controller 31 sends file F2 as the response to the printer 20.

The controller 21 then receives from the server 30 the second content (file F2) accessed by the link (step S140). The controller 21 then branches the process appropriately to whether or not a display request parameter is included in the link detected to be operated in step S110 (step S150). Because determining whether or not a display request parameter is included in the link was completed in step S120, operation proceeds according to the result of the decision. In other words, if a display request parameter is included in the link (an input field is included in the second content accessed by the link), control goes from step S150 to step S160. If a display request parameter is not included in the link (an input field is not included in the second content accessed by the link), control goes from step S150 to step S180.

In step S160, the controller 21 determines if, included in the link, there is a display request parameter that requests displaying an on-screen keyboard corresponding to an input field included in the second content. The controller 21 also determines if there is a message (prompt) corresponding to content to be input through the on-screen keyboard.

In the URL in the first example, the parameter "login_box.id" following the "kb_param=" key indicates the input field corresponding to the on-screen keyboard to be displayed. In this example, "login_box.id" means an input field for inputting a user identification number. In other words, the display request parameter included in the URL linking to the second content may be considered identification information requesting displaying an on-screen keyboard, and identifying a specific input field included in the second content as the input field associated with the on-screen keyboard. Based on the URL of the first example, the controller 21 can determine that display of an on-screen keyboard corresponding to an input field for inputting a user identification number included in the second content that is linked is requested.

The string "^{∗∗∗∗∗∗}" following the "Kb_msg=" key in the URL of the first example contains the content of the prompt. Various kinds of prompts may be displayed. For example, if the input field to which the on-screen keyboard to be displayed corresponds is an input field for inputting a user identification number as described above, a prompt such as "Please input your PIN" may be displayed. PIN is an abbreviation for Personal Identification Number. In this way, the text of the prompt may be added to the display request parameter requesting displaying an on-screen keyboard in the URL link to the second content.

As a result of the decision in step S160, the controller 21 displays an on-screen keyboard on the display 23 (step S170). At this time, if it was determined in step S160 that the text of a prompt is included, the controller 21 displays the on-screen keyboard with the prompt. The middle image in FIG. 3 shows an example of the on-screen keyboard 50 displayed in step S170. The text of the prompt, "Please input your PIN," is displayed in the display field in the on-screen keyboard 50 (the field in which the input text is displayed when the user inputs text through the on-screen keyboard 50) until the user inputs information to the same field. In other words, the controller 21 displays a prompt in the on-screen keyboard 50 based on the text information (the string "^{∗∗∗∗∗∗}" following the "Kb_msg=" key in the URL in the first example) included in the link (the URL linking to the second content).

The user then operates the on-screen keyboard 50 to input information. As a result, even when the linked second content is not displayed, the user can easily know what information to input using the on-screen keyboard 50 by reading the prompt.

After input through the on-screen keyboard displayed in step S170 is completed (such as when pressing the Enter key in the on-screen keyboard), the controller 21 interprets the file F2 received in step S140, and displays the linked second content on the display 23 (step S180).

The image on the bottom in FIG. 3 shows a web page 60 as an example of the second content. In the example in FIG. 3, the web page 60 includes an input field 61 in which the PIN is input, and an OK button 62.

When the controller 21 displays the web page 60 in step S180, the controller 21 displays, in the input field 61 on the web page 60, the string input through the on-screen keyboard 50 displayed in step S170. As described above, the controller 21 has already determined, by the decision in step S160, that the input fields included in the second content include an input field corresponding to the on-screen keyboard. Therefore, the controller 21 displays the string input through the on-screen keyboard 50 in the specific input field (in this example, the input field 61 in the web page 60 for inputting the personal identification number (PIN)).

With this configuration, input to the input field 61 in the web page 60 may be considered completed by the time the web page 60 is displayed in step S180 as the second content on the display 23. The user, by operating the OK button 62 in the web page 60, can then log in to the system 10.

When the controller 21 proceeds from step S150 to step S180, the display content on the display 23 changes from the first content to the second content.

By this display control process (particularly steps S130, S140, S150, S160, S170, S180 in FIG. 2), the controller 21 (browser 26) acquires the file F2 through the network NW from the server 30, and when displaying the content (second content) based on the file F2 on the display 23, if an input field for inputting specific information is included in the content, automatically displays an on-screen keyboard for inputting the specific information before displaying the content on the display 23. As a result, the user does not need to perform an operation to display the on-screen keyboard as in the related art, and user convenience can be improved. In addition, there is no need to add an on-screen keyboard display button as described in JP-A-2010-277120 (add a button to the second content), and the layout of the displayed content will not be disturbed.

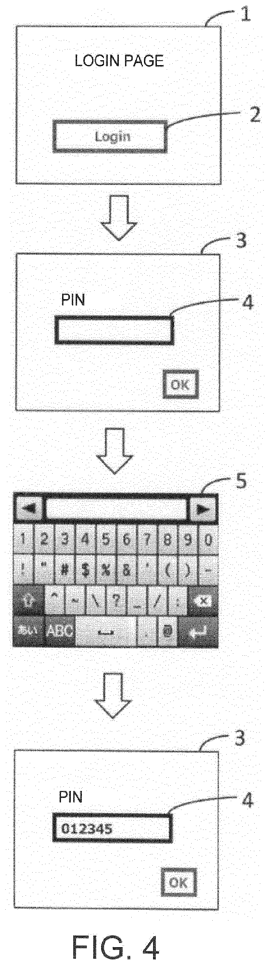

FIG. 4 shows an example of the related art for comparison with the embodiment of the invention shown in FIG. 3, and illustrates the change in the content displayed on the display of the printer. In the related art, when the login button 2 in the web page 1 shown on the display is operated by the user, the web page 3 linked to the login button 2 is displayed on the display by communication between the printer and server. If there is an input field 4 on the web page 3, the user must touch or click the input field 4 to display an on-screen keyboard 5 for inputting information to the input field 4. When the user finishes inputting to the on-screen keyboard 5, the web page 3 is displayed again to reflect the string input through the on-screen keyboard 5 in the input field 4.

This embodiment of the invention, however, eliminates the multiple step process of going to the web page in response to a user operation, the user performing an operation on an input field included in the web page displayed in response to the user action, and then the on-screen keyboard then being displayed. Instead, this embodiment of the invention enables displaying the required on-screen keyboard in response to the action that changes the web page, and thereby improves user convenience.

In this embodiment of the invention, prompted by user operation of a link in first content already displayed on the display 23, the controller 21 determines whether or not a display request parameter is included in the link, and based on the result of this decision, decides whether or not to display an on-screen keyboard on the display before displaying the second content on the display 23. As a result, this configuration can reliably execute a process of displaying an on-screen keyboard for inputting (accepting) input of specific information before displaying the linked content when an input field for inputting specific information is included in the linked content.

### 3. Applications and variations

As described above, a link (the URL to the second content) is included in a file F1 representing the first content, the URL contains a display request parameter, and the display request parameter contains information (the information following "kb_param=" in the first example) identifying a specific input field among the input fields contained in the second content that requires an on-screen keyboard. This configuration is particularly effective when the linked second content contains multiple input fields. For example, the linked second content may be a web page having first, second, and third, that is, multiple, input fields, and of the first, second, and third input fields, information may be required to be input first to the first input field. For example, the first input field may be a field for inputting the user's postal code, and the second input field may be a field for inputting the user's address.

The present invention is configured so that in such cases the display request parameter included in the URL link to the second content contains information identifying the first input field to which information should be input first in the group of input fields contained in the second content (the first, second, and third input fields in this example) as the input field corresponding to the on-screen keyboard. In this configuration, in step S170, the controller 21, based on the decision made in step S160, displays on the display 23 an on-screen keyboard corresponding to the first input field, which of the first, second, and third input fields contained in the linked second content is the input field identified by the display request parameter. As a corresponding prompt, the controller 21 also displays a message such as "Please input your postal code."

As a result, when the second content is displayed on the display 23 in step S180, inputting data to the first input field is already completed. In other words, data input to the first input field of the first, second, and third input fields is reliably completed first.

Note that the controller 21, when the second content is displayed in step S180, can display an on-screen keyboard corresponding to input fields (the second and third input fields) other than the specified input field (the first input field) in the group of input fields contained in the second content on the display 23 in response to operations in those other input fields.

The prompt is not limited to being added to the URL linking to the second content in the file F1 expressing the first content. In one variation, the prompt may be included in the second content (file F2) sent in step S210 from the server 30 to the printer 20. In this variation, the URL linking to the second content does not have information in a structure such as "&Kb_msg=^{∗∗∗∗∗∗}" as in the first example.

In this variation, the controller 21, in step S160, determines if the display request parameter included in the URL linking to the second content requests display of an on-screen keyboard corresponding to an input field included in the second content. The controller 21 also determines, by interpreting the second content (file F2) received in step S140, if there is a prompt corresponding to the content input through the on-screen keyboard. Based on this decision, the controller 21, in step S170, displays an on-screen keyboard on the display 23. At this time, in step S160, the controller 21 displays on the on-screen keyboard the prompt determined to be presented, that is, the prompt included in the second content (file F2) received in step S140.

A case in which the invention may be used is described next.

This embodiment can be applied to all devices and systems that display an on-screen keyboard, including some secure printing systems. To print securely using the printer 20 in a secure printing system, the user must first log in to the system 10 by operating the printer 20. In this event, the steps required for the user to log in can be reduced by controlling display of the first content (web page 40), on-screen keyboard 50, and second content (web page 60) on the display 23 as described with reference to FIG. 2 and FIG. 3. The user PIN input through the on-screen keyboard 50 is sent from the printer 20 to the server 30. The server 30 that receives the PIN from the printer 20 determines if the received PIN matches the PIN of a user previously registered on the secure printing system. The server 30 authenticates the user (determines log in was valid) only if the received PIN matches the PIN of a user previously registered on the secure printing system, and then enables the printer 20 to print as requested by the user that logged in.

If when content is displayed on the display an input field for inputting specific information is included in the content, and an on-screen keyboard for inputting the specific information is displayed on the display before the content is displayed, the timing for starting displaying the content is not limited to after the on-screen keyboard is displayed. For example, displaying the on-screen keyboard and starting displaying (at least part of) the content before display of the on-screen keyboard ends is also included in this embodiment of the invention.

Examples displaying one on-screen keyboard before displaying content are described above, but multiple on-screen keyboards may be displayed before displaying content. For example, if first to third input fields are included in the linked content, a first on-screen keyboard for inputting to the first input field, and a second on-screen keyboard for inputting to the second input field, may be displayed on the display 23 before displaying the content. First to third on-screen keyboards for inputting to the first to third input fields (that is, all input fields included in the content) may also be displayed on the display 23 before content is displayed.

When multiple on-screen keyboards are displayed before the content, the multiple on-screen keyboards may be displayed simultaneously on the display 23, or a first on-screen keyboard displayed first, the first on-screen keyboard removed and the second on-screen keyboard displayed after input to the first input field is completed, and then the second on-screen keyboard removed and the third on-screen keyboard displayed after input to the second input field is completed. Of course, two keyboards or four or more keyboards can also be displayed. In this case, input to all input fields may be confirmed when the Enter key on the on-screen keyboard 50 such as shown in FIG. 3 is clicked, for example. The controller 21, for example, may also display multiple on-screen keyboards contained in multiple display request parameters in a link.

Note that the controller 21 (processor) in this embodiment may comprise one or more integrated circuits. The controller 21 may also comprise one or more CPUs, one or more ASIC devices, or a combination thereof.

The invention being thus described, it will be obvious that it may be varied in many ways. Such variations may be made without departing from the scope of the invention, as defined by the following claims.

## Claims

1. A printer (20) comprising:
a display (23); and
a display controller (21) configured to acquire a file (F2) from a server (30) through a network (NW), and display content based on the file on the display;
wherein, in being configured to display content based on the file on the display, the display controller is arranged, when an input field (61) for inputting specific information is included in the content (60), to automatically display an on-screen keyboard (50) configured to receive input of the specific information on the display before displaying the content (60), to display, in a specific position in the on-screen keyboard, a message (51) corresponding to information input through the on-screen keyboard to the input field, and to receive the specific information input through the displayed on-screen keyboard before displaying the content, and
wherein the display controller, after the specific information is input to the on-screen keyboard, is configured to stop displaying the on-screen keyboard and to display the content (60) with the specific information entered in the input field, on the display.

2. The printer described in claim 1, wherein, in being arranged to automatically display the on-screen keyboard (50), the display controller is further arranged, when operation of a link on a page (40) displayed on the display is received, to determine whether or not information corresponding to the input field (61) is contained in the link, to request the content (60) from the server, and to receive the content (60) from the server as the file (F2), and
when the display controller determines the information is contained in the link, to display the on-screen keyboard (50) on the display before displaying the content (60) when displaying content (60) in response to operation of the link.

3. The printer described in claim 1 or claim 2, wherein:
when the input field (61) is a first input field, and the first input field and a second input field are included in the content (60),
the display controller is arranged to display an on-screen keyboard to receive input to the first input field on the display before displaying the content (60), and to display an on-screen keyboard to receive input to the second input field on the display in response to an operation in the second input field.

4. The printer described in claim 2 or claim 3 as dependent upon claim 2, wherein:
the display controller is arranged, when operation of the link on the page (40) displayed on the display is received and text information of a message corresponding to information input through the on-screen keyboard to the input field is included in the link, to display the message based on the text information in the specific position in the on-screen keyboard.

5. A content display method performed using a printer (20), the printer (20) comprising:
a display (23); and
a display controller (21);
the content display method including a display control step performed using the display controller of acquiring a file (F2) from a server (30) through a network (NW), and displaying content based on the file on a display, the display control step:
when an input field (61) for inputting specific information is included in the content (60), automatically displaying an on-screen keyboard (50) configured to receive input of the specific information on the display before displaying the content (60), displaying, in a specific position in the on-screen keyboard, a message (51) corresponding to information input through the on-screen keyboard to the input field, and receiving the specific information input through the displayed on-screen keyboard before displaying the content; and
after the specific information is input to the on-screen keyboard (50), stopping display of the on-screen keyboard before performing said displaying the content (60) based on the file on the display with the specific information entered in the input field (61), on the display.

6. The content display method described in claim 5, wherein said automatically displaying an on-screen keyboard (50) in the display control step further comprises:
when operation of a link on a page (40) displayed on the display is received, determining whether or not information corresponding to the input field (61) is contained in the link, requesting the content (60) from the server, and receiving the content (60) from the server as the file (F2), and
when the link contains the information, displaying the on-screen keyboard (50) on the display (23) before displaying the content (60) when displaying content (60) in response to operation of the link.

7. The content display method described in claim 5 or claim 6, wherein:
when the input field (61) is a first input field, and the first input field and a second input field are included in the content (60),
the display control step displays an on-screen keyboard to receive input to the first input field on the display before displaying the content (60), and displays an on-screen keyboard to receive input to the second input field on the display in response to an operation in the second input field.

8. The content display method described in claim 6 or claim 7 as dependent upon claim 6, further comprising:
the display control step, when operation of the link on the page (40) displayed on the display (23) is received and text information of a message corresponding to information input through the on-screen keyboard (50) to the input field (61) is included in the link, displaying the message based on the text information in the specific position in the on-screen keyboard (50).

## Patentansprüche

1. Drucker (20), umfassend:
ein Display (23); und
eine Anzeigesteuereinheit (21), die konfiguriert ist, eine Datei (F2) von einem Server (30) durch ein Netzwerk (NW) zu erlangen und Inhalt basierend auf der Datei auf dem Display anzuzeigen;
wobei, die Anzeigesteuereinheit, da sie konfiguriert ist, Inhalt basierend auf der Datei auf dem Display anzuzeigen, angeordnet ist, wenn ein Eingabefeld (61) zum Eingeben spezifischer Informationen in dem Inhalt (60) enthalten ist, automatisch eine Tastatur (50) auf dem Bildschirm anzuzeigen, die konfiguriert ist, Eingabe der spezifischen Informationen auf dem Display zu empfangen, bevor der Inhalt (60) angezeigt wird, um eine Nachricht (51) an einer spezifischen Position auf der Tastatur auf dem Bildschirm anzuzeigen, die Informationen entspricht, die durch die Tastatur auf dem Bildschirm in das Eingabefeld eingegeben werden, und die spezifischen Informationen, die durch die angezeigte Tastatur auf dem Bildschirm eingegeben werden, zu empfangen, bevor der Inhalt angezeigt wird, und
wobei die Anzeigesteuereinheit, nachdem die spezifischen Informationen in die Tastatur auf dem Bildschirm eingegeben wurden, konfiguriert ist, Anzeige der Tastatur auf dem Bildschirm zu stoppen und den Inhalt (60) mit den spezifischen Informationen, die in dem Eingabefeld eingegeben werden, auf dem Display anzuzeigen.

2. Drucker nach Anspruch 1, wobei die Anzeigesteuereinheit, da sie angeordnet ist, die Tastatur (50) auf dem Bildschirm automatisch anzuzeigen, weiter angeordnet ist, wenn Betrieb eines Links auf einer auf dem Display angezeigten Seite (40) empfangen wird, zu bestimmen, ob Informationen, die dem Eingabefeld (61) entsprechen, in dem Link beinhaltet sind oder nicht, den Inhalt (60) von dem Server anzufordern und den Inhalt (60) von dem Server als die Datei (F2) zu empfangen, und
wenn die Anzeigesteuereinheit bestimmt, dass die Informationen in dem Link beinhaltet sind, die Tastatur (50) auf dem Bildschirm auf dem Display anzuzeigen, bevor der Inhalt (60) angezeigt wird, wenn Inhalt (60) in Reaktion auf Betrieb des Links angezeigt wird.

3. Drucker nach Anspruch 1 oder Anspruch 2, wobei:
wenn das Eingabefeld (61) ein erstes Eingabefeld ist und das erste Eingabefeld und ein zweites Eingabefeld in dem Inhalt (60) enthalten sind,
die Anzeigesteuereinheit angeordnet ist, eine Tastatur auf dem Bildschirm anzuzeigen, um Eingabe in das erste Eingabefeld auf dem Display zu empfangen, bevor der Inhalt (60) angezeigt wird, und eine Tastatur auf dem Bildschirm anzuzeigen, um Eingabe in das zweite Eingabefeld auf dem Display in Reaktion auf einen Betrieb in dem zweiten Eingabefeld zu empfangen.

4. Drucker nach Anspruch 2 oder Anspruch 3, wenn von Anspruch 2 abhängig, wobei:
die Anzeigesteuereinheit angeordnet ist, wenn Betrieb des Links auf der auf dem Display angezeigten Seite (40) empfangen wird und Textinformationen einer Nachricht, die Informationen entsprechen, die durch die Tastatur auf dem Bildschirm in das Eingabefeld eingegeben werden, in dem Link enthalten sind, die Nachricht basierend auf dem Textinformationen an einer spezifischen Position in der Tastatur auf dem Bildschirm anzuzeigen.

5. Inhaltsanzeigeverfahren, das unter Verwendung eines Druckers (20), durchgeführt wird, wobei der Drucker (20) Folgendes umfasst:
ein Display (23); und
eine Anzeigesteuereinheit (21);
wobei das Inhaltsanzeigeverfahren einen Anzeigesteuerungsschritt enthält, der unter Verwendung der Anzeigesteuereinheit durchgeführt wird, zum Erlangen einer Datei (F2) von einem Server (30) durch ein Netzwerk (NW) und Anzeigen von Inhalt basierend auf der Datei auf einem Display, wobei der Anzeigesteuerungsschritt:
wenn ein Eingabefeld (61) zum Eingeben spezifischer Informationen in dem Inhalt (60) enthalten ist, automatisch eine Tastatur (50) auf dem Bildschirm anzeigt, die konfiguriert ist, Eingabe der spezifischen Informationen auf dem Display zu empfangen, bevor der Inhalt (60) angezeigt wird, eine Nachricht (51) an einer spezifischen Position auf der Tastatur auf dem Bildschirm anzeigt, die Informationen entspricht, die durch die Tastatur auf dem Bildschirm in das Eingabefeld eingegeben werden, und die spezifischen Informationen, die durch die angezeigte Tastatur auf dem Bildschirm eingegeben werden, empfängt, bevor der Inhalt angezeigt wird, und
nachdem die spezifischen Informationen in die Tastatur (50) auf dem Bildschirm eingegeben wurden, Anzeige der Tastatur auf dem Bildschirm stoppt, bevor die Anzeige des Inhalts (60) auf dem Display basierend auf der Datei auf dem Display mit den spezifischen Informationen durchgeführt wird, die in dem Eingabefeld (61) eingegeben werden.

6. Inhaltsanzeigeverfahren nach Anspruch 5, wobei das automatische Anzeigen einer Tastatur (50) auf dem Bildschirm in dem Anzeigesteuerungsschritt weiter Folgendes umfasst:
wenn Betrieb eines Links auf einer auf dem Display angezeigten Seite (40) empfangen wird, Bestimmen, ob Informationen, die dem Eingabefeld (61) entsprechen, in dem Link beinhaltet sind oder nicht, Anfordern des Inhalts (60) von dem Server und Empfangen des Inhalts (60) von dem Server als die Datei (F2), und
wenn der Link die Informationen beinhaltet, Anzeigen der Tastatur (50) auf dem Bildschirm auf dem Display (23), bevor der Inhalt (60) angezeigt wird, wenn Inhalt (60) in Reaktion auf Betrieb des Links angezeigt wird.

7. Inhaltsanzeigeverfahren nach Anspruch 5 oder Anspruch 6, wobei:
wenn das Eingabefeld (61) ein erstes Eingabefeld ist und das erste Eingabefeld und ein zweites Eingabefeld in dem Inhalt (60) enthalten sind,
der Anzeigesteuerungsschritt eine Tastatur auf dem Bildschirm anzeigt, um Eingabe in das erste Eingabefeld auf dem Display zu empfangen, bevor der Inhalt (60) angezeigt wird, und eine Tastatur auf dem Bildschirm anzeigt, um Eingabe in das zweite Eingabefeld auf dem Display in Reaktion auf einen Betrieb in dem zweiten Eingabefeld zu empfangen.

8. Inhaltsanzeigeverfahren nach Anspruch 6 oder Anspruch 7, wenn von Anspruch 6 abhängig, weiter umfassend:
der Anzeigesteuerungsschritt, wenn Betrieb des Links auf der auf dem Display (23) angezeigten Seite (40) empfangen wird und Textinformationen einer Nachricht, die Informationen entsprechen, die durch die Tastatur (50) auf dem Bildschirm in das Eingabefeld eingegeben werden, in dem Link enthalten sind, die Nachricht basierend auf dem Textinformationen an der spezifischen Position in der Tastatur (50) auf dem Bildschirm anzeigt.

## Revendications

1. Imprimante (20) comprenant :
un affichage (23) ; et
un dispositif de commande d'affichage (21) configuré pour acquérir un fichier (F2) à partir d'un serveur (30) par le biais d'un réseau (NW), et pour afficher du contenu sur la base du fichier sur l'affichage ;
dans laquelle, tout en étant configuré pour afficher du contenu sur la base du fichier sur l'affichage, le dispositif de commande d'affichage est conçu pour, lorsqu'un champ d'entrée (61) destiné à l'entrée d'informations spécifiques est inclus dans le contenu (60), afficher automatiquement un clavier virtuel (50) configuré pour recevoir une entrée des informations spécifiques sur l'affichage avant l'affichage du contenu (60), pour afficher, à une position spécifique sur le clavier virtuel, un message (51) correspondant à une information entrée par le biais du clavier virtuel dans le champ d'entrée, et pour recevoir les informations spécifiques entrées par le biais du clavier virtuel affiché avant l'affichage du contenu, et
dans laquelle, après l'entrée des informations spécifiques sur le clavier virtuel, le dispositif de commande d'affichage est configuré pour arrêter l'affichage du clavier virtuel et pour afficher le contenu (60) avec les informations spécifiques entrées dans le champ d'entrée, sur l'affichage.

2. Imprimante selon la revendication 1, dans laquelle, tout en étant conçu pour afficher automatiquement le clavier virtuel (50), le dispositif de commande d'affichage est en outre conçu pour déterminer, lorsque l'activation d'un lien sur une page (40) affichée sur l'affichage est reçue, si oui ou non l'information correspondant au champ d'entrée (61) est contenue dans le lien, pour demander le contenu (60) au serveur, et pour recevoir le contenu (60) à partir du serveur sous la forme du fichier (F2), et
lorsque le dispositif de commande d'affichage détermine que l'information est contenue dans le lien, pour afficher le clavier virtuel (50) sur l'affichage avant l'affichage du contenu (60) lors de l'affichage de contenu (60) en réponse à l'activation du lien.

3. Imprimante selon la revendication 1 ou la revendication 2, dans laquelle :
lorsque le champ d'entrée (61) est un premier champ d'entrée, et que le premier champ d'entrée et un deuxième champ d'entrée sont inclus dans le contenu (60),
le dispositif de commande d'affichage est conçu pour afficher un clavier virtuel afin de recevoir une entrée dans le premier champ d'entrée sur l'affichage avant l'affichage du contenu (60), et pour afficher un clavier virtuel afin de recevoir une entrée dans le deuxième champ d'entrée sur l'affichage en réponse à une opération dans le deuxième champ d'entrée.

4. Imprimante selon la revendication 2 ou la revendication 3 dans la mesure où celle-ci dépend de la revendication 2, dans laquelle :
le dispositif de commande d'affichage est conçu, lorsque l'activation du lien sur la page (40) affichée sur l'affichage est reçue et que des informations de texte d'un message correspondant à une information entrée par le biais du clavier virtuel dans le champ d'entrée sont incluses dans le lien, pour afficher le message sur la base des informations de texte à la position spécifique sur le clavier virtuel.

5. Procédé d'affichage de contenu mis en œuvre à l'aide d'une imprimante (20), l'imprimante (20) comprenant :
un affichage (23) ; et
un dispositif de commande d'affichage (21) ;
le procédé d'affichage de contenu incluant une étape de commande d'affichage exécutée à l'aide du dispositif de commande d'affichage pour l'acquisition d'un fichier (F2) à partir d'un serveur (30) par le biais d'un réseau (NW), et l'affichage de contenu sur la base du fichier sur un affichage, l'étape de commande d'affichage comprenant :
lorsqu'un champ d'entrée (61) permettant d'entrer des informations spécifiques est inclus dans le contenu (60), l'affichage automatique d'un clavier virtuel (50) configuré pour recevoir une entrée des informations spécifiques sur l'affichage avant l'affichage du contenu (60), l'affichage, à une position spécifique sur le clavier virtuel, d'un message (51) correspondant à une information entrée par le biais du clavier virtuel dans le champ d'entrée, et la réception des informations spécifiques entrées par le biais du clavier virtuel affiché avant l'affichage du contenu ; et
après l'entrée des informations spécifiques sur le clavier virtuel (50), l'arrêt de l'affichage du clavier virtuel avant l'exécution dudit affichage du contenu (60) sur la base du fichier sur l'affichage avec les informations spécifiques entrées dans le champ d'entrée (61), sur l'affichage.

6. Procédé d'affichage de contenu selon la revendication 5, dans lequel ledit affichage automatique d'un clavier virtuel (50) dans l'étape de commande d'affichage comprend en outre :
lorsque l'activation d'un lien sur une page (40) affichée sur l'affichage est reçue, la détermination si oui ou non l'information correspondant au champ d'entrée (61) est contenue dans le lien, la demande du contenu (60) au serveur, et la réception du contenu (60) à partir du serveur sous la forme du fichier (F2), et
lorsque le lien contient l'information, l'affichage du clavier virtuel (50) sur l'affichage (23) avant l'affichage du contenu (60) lors de l'affichage de contenu (60) en réponse à l'activation du lien.

7. Procédé d'affichage de contenu selon la revendication 5 ou la revendication 6, dans lequel :
lorsque le champ d'entrée (61) est un premier champ d'entrée, et que le premier champ d'entrée et un deuxième champ d'entrée sont inclus dans le contenu (60),
l'étape de commande d'affichage affiche un clavier virtuel pour recevoir une entrée dans le premier champ d'entrée sur l'affichage avant l'affichage du contenu (60), et affiche un clavier virtuel pour recevoir une entrée dans le deuxième champ d'entrée sur l'affichage en réponse à une opération dans le deuxième champ d'entrée.

8. Procédé d'affichage de contenu selon la revendication 6 ou la revendication 7 dans la mesure où celle-ci dépend de la revendication 6, comprenant en outre :
l'étape de commande d'affichage, lorsque l'activation du lien sur la page (40) affichée sur l'affichage (23) est reçue et que des informations de texte d'un message correspondant à une information entrée par le biais du clavier virtuel (50) dans le champ d'entrée (61) sont incluses dans le lien, l'affichage du message sur la base des informations de texte à la position spécifique sur le clavier virtuel (50).
